# EUROPEAN PATENT SPECIFICATION

(11) **EP 0 950 292 B1**
(45) Date of publication and mention of the grant of the patent: **03.09.2003**
(21) Application number: 97948745.1
(22) Date of filing: 12.12.1997
(51) Int. Cl.: H04B 10/06, H04B 10/08

(54) **AN OPTICAL RECEIVER AND A METHOD OF PROTECTING SUCH A RECEIVER**
OPTISCHER EMPFÄNGER UND VERFAHREN ZUM SCHUTZ EINES SOLCHEN EMPFÄNGERS
RECEPTEUR OPTIQUE ET PROCEDE SERVANT A LE PROTEGER

(30) Priority: 13.12.1996 DK 142496
(43) Date of publication of application: 20.10.1999
(73) Proprietor: TELLABS DENMARK A/S, 2750 Ballerup (DK)
(72) Inventor: OLESEN, Dennis, Skjodt, DK-4050 Skiby (DK); PEDERSEN, Claus, Friis, DK-2100 Copenhagen (DK)
(74) Representative: Boesen, Johnny Peder
(86) International application number: DK9700565
(87) International publication number: WO98026524

(56) References cited:
- JP-A- 9 036 815
- US-A- 4 262 366
- US-A- 4 399 565
- PATENT ABSTRACTS OF JAPAN, Vol. 17, No. 347, (E-1391); & JP,A,05 048 543 (SUMITOMO ELECTRIC IND LTD) 26 February 1993.

## Description

The invention relates to a method of protecting an optical receiver, which comprises a photodiode and is capable of receiving optical communications signals from an optical transmitter, against destructive effects caused by strong optical pulses.

The invention moreover relates to an optical receiver comprising a photodiode which, in an operational state, is biased by a normal operational voltage sufficient for the photodiode to be capable of converting modulated optical communications signals into corresponding electrical signals.

In teletransmission systems incorporating optical amplifiers, strong optical pulses may occur when the system is started.

This may be the case e.g. when a "shut-down" optical system with optical in-line amplifiers is started. If, during shut-down of a system, the optical amplifiers operate with a certain population inversion, the energy stored in the population inversion of the active fibre may be discharged in a brief, but very strong pulse in many cases. This pulse may have a destructive effect on sensitive equipment further down in the transmission system, e.g. an optical receiver which incorporates an avalanche photodiode (APD).

Another example of the occurrence of such strong optical pulses is in connection with the start of an optical preamplifier, which will typically be arranged at some distance from an optical receiver proper. A bandpass filter will frequently be arranged on the output of such a preamplifier, said filter serving to remove optical noise outside the signal bandwidth. During start, the bandpass filter will scan the relevant optical spectrum to find the correct information signal, and then the filter is locked to the optical wavelength concerned. In the transition from scanning to locking, the optical preamplifier may emit very strong optical signals in a direction toward the subsequent optical receiver. The signals in this transient phase will be destructive to the receiver in many cases.

In the start situation of an optical fibre it is known to counteract the above-mentioned destructive effect by reducing the level of the emitted pulses. This may be done by regulating the gain or the population inversion in the optical amplifiers, so that the energy available in the transient phases is below the limit at which the receiver is destroyed. Such a regulation may be performed e.g. by introducing detectors at relevant places in the amplifiers, e.g. in the input of an in-line amplifier or within the filter in an optical preamplifier. These detectors will be used in the transient periods for controlling the power or inversion levels, so that the peak power during transient periods, if any, is not destructive to other parts of the system.

This solution, however, has a number of drawbacks. The additional detectors will generally degrade the noise figure of the optical amplifier and moreover add to the overall cost of the system. Further, the additional regulation will increase the start time of the transmission system.

In the case of optical pulses as a consequence of the scanning of the optical filter on the output of an optical preamplifier, it is known to provide the output of the filter with optical couplers controlled by the filter so that the optical power is coupled to the transmission fibre only when the pulses are over. This solution is vitiated by the same drawbacks as are described above.

A concrete example of such a solution is known from US Patent No. 5 278 686, which describes a system in which two stations are connected by two optical fibres on which unidirectional optical information is transmitted. The optical information signals are amplified between the two stations by optical fibre amplifiers. Each station includes a protection device arranged so as to be capable of detecting spontaneous emission from the fibre amplifiers and/or information signals. Thus, it is possible via one of the two unidirectional lines to interrupt one of the two optical fibres with an optical switch so that no destructive optical power is transmitted. The main object of said patent is to protect the human eye against harmful optical signals, but it may also comprise protection of an optical receiver. In addition to the drawbacks described above, this solution requires the use of two optical fibres between the two stations and the insertion of an additional component in the form of an optical switch.

Accordingly, an object of the invention is to provide a method of protecting an optical receiver against said destructive effects, which does not require any manipulation in each individual one of the amplifiers of the system in the transmission line and thus does not affect the noise figure of the amplifiers.

This is achieved according to the invention in that the photodiode, when it is detected in the receiver that communications signals are not received, is biased by a voltage significantly lower than a normal operational voltage, while modulating, from the optical transmitter, a control signal on the transmitted optical power. It is detected in the receiver whether this control signal is received, and the photodiode is biased by the normal operational voltage when it is detected in the receiver that the control signal is received.

Biasing of the photodiode by a lower voltage when no communications signals are received, i.e. when the system is shut down, causes the photodiode to assume a state in which it can tolerate the strong optical pulses without being damaged. Since, in this state, the receiver is not capable of detecting the communications signals, a special control signal which the receiver is capable of receiving with the diode in said state, is modulated on the emitted optical power from the transmitter side. When the control signal is detected in the receiver, this indicates that the system has started again, and that the strong optical pulses are over. The diode may therefore be brought back to its normal operational state.

As stated in claim 2, the control signal may expediently be in the form of a low-frequency pilot tone which is superimposed on the optical power, said photodiode, with the low bias, being still capable of detecting low-frequency changes in the optical power received. In a concrete embodiment of the invention, stated in claim 3, a frequency of 14.4 kHz may be used.

When, as stated in claim 4, an avalanche photodiode is used as a photodiode in the receiver, and the photodiode is biased by a voltage so low that the avalanche effect ceases when the communications signals are not detected, a situation is achieved in which the photodiode can tolerate the strong optical pulses, while being capable of detecting low-frequency changes in the optical power received.
An expedient embodiment of the invention is obtained when, as stated in claim 5, the control signal is modulated constantly on the emitted optical power, since no control of this signal is required, and then, as stated in claim 6, the presence of the communications signals may be detected at the receiver merely by detecting the control signal. This means that as long as the control signal is present, the photodiode can operate with a normal bias, since there is no risk of said strong pulses. If, on the other hand, the control signal is absent, this indicates that the connection has been interrupted or shut down, and the photodiode is therefore biased with the low voltage, as re-establishment of the connection will involve a risk of strong pulses. When the control signal is detected again, the connection is intact again, and the photodiode can revert to the normal state.

As mentioned, the invention also relates to an optical receiver having a photodiode. When the receiver is adapted to assume a safety state in which the photodiode is biased by a voltage significantly lower than the normal operational voltage, when no optical communications signals are received, it is ensured that the receiver can tolerate the strong optical pulses in the safety state without being damaged. When, moreover, in the safety state, the receiver is capable of detecting the presence of an optical signal modulated with a control signal and of switching to the operational state when the control signal is detected, it is ensured that the receiver can be brought back to its normal operational state. Detection of the control signal indicates that the system has started again, and that the strong pulses are therefore over.

In an expedient embodiment, which is defined in claim 8, the photodiode is an avalanche photodiode, and when, as stated in claim 9, this is biased in the safety state by a voltage which is so low that the avalanche effect ceases, a receiver is obtained whose photodiode can tolerate the strong optical pulses, while being capable of detecting low-frequency changes in the optical power received.

When, as stated in claim 10, the receiver is adapted to detect the presence of said control signal also in the operational state and to assume the safety state when the control signal is not received, it is ensured that the photodiode can operate with normal bias as long as the control signal is present, since there is no risk of said strong pulses. If, on the other hand, the control signal is absent, this indicates that the connection has been interrupted or shut down, and the photodiode is therefore biased with the low voltage, since re-establishment of the connection involves a risk of strong pulses. When the control signal is detected again, the connection is intact again, and the photodiode can revert to the normal state.

If, as mentioned in claim 11, the receiver is moreover adapted to switch to the operational state with a time delay when the control signal is detected in the safety state, it is ensured that the strong optical pulses are over before the diode reverts to the operational state, since these, as mentioned, occur precisely in connection with the situation where the system reverts to normal operation.

The invention will now be described more fully below with reference to the drawing, in which
figure 1 shows an example of an optical communications system in which the invention may be applied,
figure 2 shows a typical curve of the multiplication factor M of an avalanche photodiode as a function of the bias of the diode, and
figure 3 shows a typical curve of the parallel capacity of an avalanche photodiode as a function of the bias of the diode.

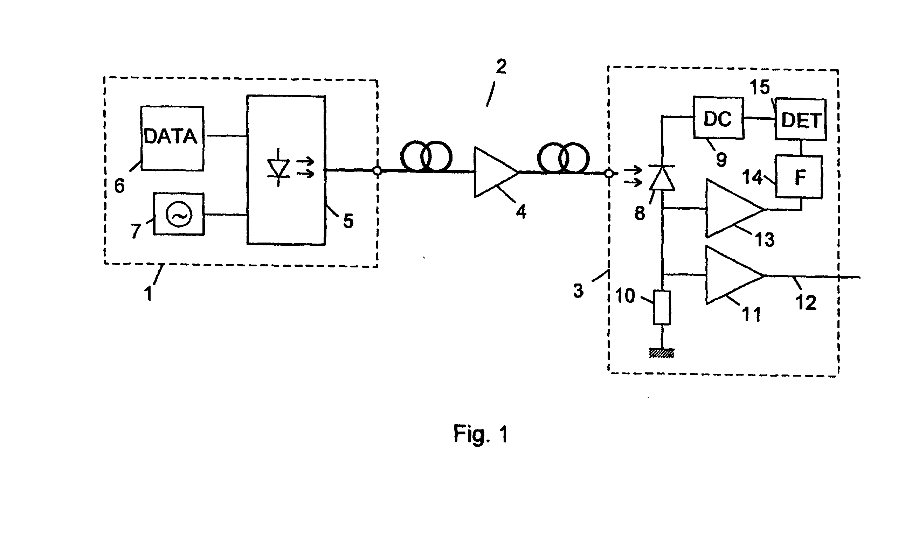

Figure 1 shows an example of an optical communications system in which the invention may be applied. The system comprises an optical transmitter unit 1 which is connected to an optical receiver 3 via an optical fibre connection 2. One or more optical fibre amplifiers may be inserted into the optical fibre connection 2. The connection is shown with a single amplifier 4 in figure 1.

The transmitter unit 1 is arranged to be capable of transmitting an optical signal which is modulated with an information signal and a pilot tone signal, respectively. The transmitter unit 1 has an optical transmitter 5 proper, which will typically comprise a laser diode emitting optical power at a given wavelength. The emitted optical power is modulated partly with a high-frequency digital information signal containing the data which are to be transmitted via the fibre connection 2, and which are fed to the transmitter 5 from a data unit 6, and partly with a low-frequency pilot tone signal which is fed from a pilot tone generator 7. The pilot tone signal may e.g. be a sine signal having a frequency of 14.4 kHz.

The optical signal emitted from the transmitter 5 is transmitted through the optical fibre connection 2 to the receiver 3 and passes the fibre amplifier 4 en route. As described above, start of the system may involve formation of strong optical pulses which may be destructive to the subsequent receiver 3. It will be described below how this effect may be counteracted.

In the example, the receiver 3 is arranged such that an avalanche photodiode 8 is biased via an adjustable voltage supply 9. The optical power incident on the photodiode 8 is converted into a current through the photodiode, which will typically be proportional to the incident optical power when the bias is selected expediently. The current through the photodiode 8 also passes through a resistor 10, and measurement of the voltage drop across this resistor, e.g. with an amplifier 11, gives an electrical signal 12 which is indicative of the optical power received from the fibre connection 2, and which contains the data originating from the data unit 6. The data signal receiver may also be constructed in other ways, all of which are well-known and in general without importance to the invention. They will therefore not be described more fully here.

The receiver 3 is moreover provided with a second amplifier 13 which is connected to a filter 14 arranged so as to allow the pilot tone of the 14.4 kHz to pass to a detector circuit 15. The detector circuit 15, which may be arranged as a simple threshold value detector, controls the voltage supply 9 so that, when the pilot tone is detected, the photodiode 8 is biased with its normal bias and operates as described above. If, on the other hand, the pilot tone is not detected, the supply voltage is reduced to a considerably lower value. This will be described more fully below.

The reason why the mentioned strong optical pulses can be destructive to the receiver is that they will involve correspondingly strong current pulses in the photodiode, and the power dissipation caused by this can destroy the diode. When the diode is biased by a suitable bias voltage, the current in an avalanche photodiode is given by the expression I_{d} = M · R · Pᵢₙ, where Pᵢₙ is the optical power incident on the diode, R is the responsitivity of the diode and is a constant for the diode type concerned, and M is a multiplication factor by which the current in an avalanche photodiode because of avalanche multiplication will be greater than the corresponding current without avalanche multiplication.

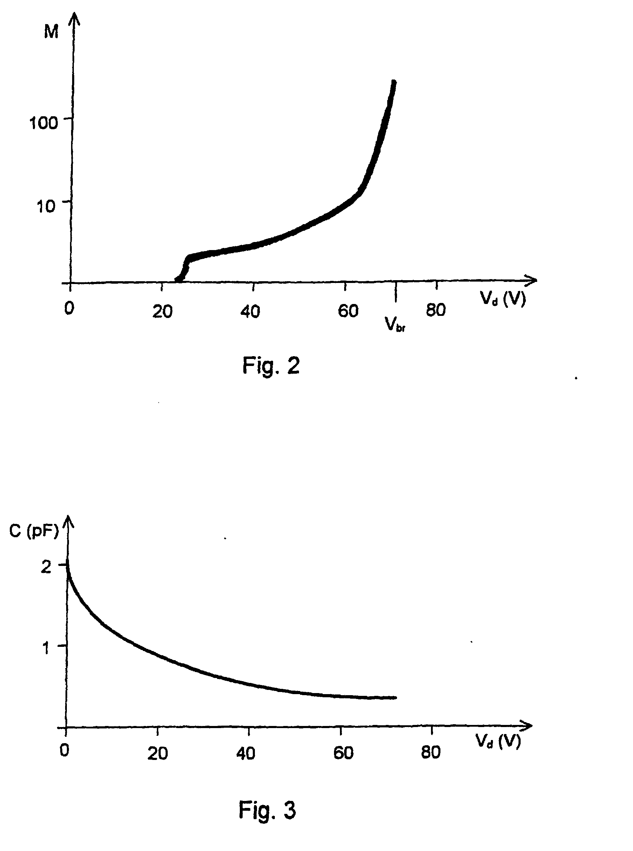

The multiplication factor M depends on the voltage across the diode. Figure 2 shows an example of M as a function of the diode voltage V_{d} for an InGaAs avalanche photodiode. M increases infinitely at a voltage V_{br}, which is called the breakdown voltage, and which is about 70 volts for the shown photodiode. The above-mentioned normal bias of the diode is selected so that M has a suitably high value in order to utilize the avalanche effect. A value close to the breakdown voltage, e.g. 60-65 volts, will typically be selected. It will be seen from the curve in figure 2 than when the bias of the diode diminishes, also M will diminish, and at voltages below about 20 volts M will be 1, and the avalanche effect will thus cease. In this range, the diode will thus continue to serve as a photodiode, but the current in the diode for a given optical power will be far smaller than at the normal bias, and the diode can thereby tolerate a considerably stronger optical power, as occurs in said pulses.

Furthermore, the bandwidth in this range will be greatly reduced, so that only slow changes in the optical power can be detected and thus only signals of a very low frequency can be received. One reason is that the capacity of the diode increases when the voltage across it is reduced. This is shown in figure 3, which shows the capacity of the same diode as the curve in figure 2.
This means that, when the detector circuit 15 reduces the bias of the diode to a value in the mentioned range via the voltage supply 9, the diode can tolerate the strong optical pulses while still being capable of registering the pilot tone of the 14.4 kHz. When, for some reason, the system is shut down after having been in normal operation, both the information signals and the pilot tone will disappear from the input of the receiver, and when the detector circuit 15 detects that the pilot tone is no longer present, the bias of the diode is reduced so that the receiver assumes the safe state in which it can tolerate strong pulses. Alternatively, if the pilot tone is not present all the time, the receiver may assume the safe state when it is detected that the information signals have disappeared, since they will also disappear when the system is shut down.

As long as the system is down, the pilot tone from the transmitter 5 will not arrive via the fibre connection 2, and the receiver will therefore remain in the safe state. No information signals will arrive in this state, and it is therefore without importance that the receiver cannot detect these, provided it can detect whether the pilot tone is present again. Once the system has started after the interruption and the strong pulses are over, the pilot tone will get through the fibre connection 2 and again be detected by the detector circuit 15, and the diode may again be provided with its normal bias so that it can detect the information signals. To be certain that the strong pulses are over before the diode is caused to assume its sensitive state, the detector circuit may optionally be provided with a suitable time delay which corresponds to the duration of the pulses. However, this will frequently not be necessary, as, in many systems, the pulses will actually be over before the pilot tone can be detected at the receiver.
Usually, the transmitter 1 will be arranged such that the pilot tone is constantly modulated on the transmitted optical power, and the detector circuit 15 may merely be arranged to bias the diode normally when the pilot tone is detected, and to reduce the bias when the pilot tone is not detected, as described above. Alternatively, the safe state may be assumed when the information signals disappear, and then only the pilot tone will be transmitted when the receiver is to be brought back to its normal operational state after an interruption.

Although a preferred embodiment of the present invention has been described and shown, the invention is not restricted to it, but may also be embodied in other ways within the subject-matter defined in the appended claims.

## Claims

1. A method of protecting an optical receiver (3), which comprises a photodiode (8) and is capable of receiving optical communications signals from an optical transmitter (5), against destructive effects caused by strong optical pulses,
**characterised in**
• **that** the photodiode (8), when it is detected in the receiver that communications signals are not received, is biased by a voltage significantly lower than a normal operational voltage,
• **that** a control signal is modulated from the optical transmitter (5) on the transmitted optical power,
• **that** it is detected in the receiver (3) whether this control signal is received,
• and **that** the photodiode (8) is biased by the normal operational voltage when it is detected in the receiver that the control signal is received.

2. A method according to claim 1, **characterised in that** the control signal, which is modulated in the optical transmitter (5) on the transmitted optical power, is a low-frequency pilot tone.

3. A method according to claim 2, **characterised in that** the low-frequency pilot tone has a frequency of 14.4 kHz.

4. A method according to claims 1-3, **characterised in that** an avalanche photodiode (8) is used as a photodiode in the receiver, and that the photodiode, when communications signals are not detected, is biased by a voltage which is so low that the avalanche effect ceases.

5. A method according to claims 1-4, **characterised in that** the control signal is constantly modulated on the transmitted optical power.

6. A method according to claim 5, **characterised in that** the presence of the communications signals at the receiver (3) is detected by detecting the control signal.

7. An optical receiver (3) comprising a photodiode (8) which, in an operational state, is biased by a normal operational voltage sufficient for the photodiode (8) to be capable of converting modulated optical communications signals into corresponding electrical signals,
**characterised in that**, when optical communications signals are not received, the receiver (3) is moreover adapted to assume a safety state in which the photodiode (8) is biased by a voltage significantly lower than the normal operational voltage, and, in the safety state, to detect the presence of an optical signal modulated with a control signal, and to switch to the operational state when the control signal is detected.

8. An optical receiver according to claim 7, **characterised in that** the photodiode is an avalanche photodiode (8).

9. An optical receiver according to claim 8, **characterised** = in that, in the safety state, it is adapted to bias the avalanche photodiode (8) by a voltage which is so low that the avalanche effect ceases.

10. An optical receiver according to claims 7-9, **characterised in that** it is adapted to detect the presence of said control signal also in the operational state and to assume the safety state when the control signal is not received.

11. An optical receiver according to claims 7-10, **characterised in that** it is adapted to switch to the operational state with a time delay when the control signal is detected in the safety state.

## Patentansprüche

1. Verfahren zum Schützen eines optischen Empfängers (3), der eine Fotodiode (8) umfasst und optische Datenübertragungssignale von einem optischen Sender (5) empfangen kann, gegen zerstörende Effekte, die durch starke optische Impulse hervorgerufen werden, **dadurch gekennzeichnet,**
• **dass** die Fotodiode (8), wenn es im Empfänger detektiert wird, dass keine Datenübertragungssignale empfangen werden, durch eine Spannung vorgespannt wird, die signifikant niedriger ist als eine normale Betriebsspannung,
• **dass** ein Steuersignal von dem optischen Sender (5) auf die optische Sendeleistung aufmoduliert wird,
• **dass** es im Empfänger (3) detektiert wird, ob dieses Steuersignal empfangen wird,
• und **dass** die Fotodiode (8) durch die normale Betriebsspannung vorgespannt wird, wenn es im Empfänger detektiert wird, dass das Steuersignal empfangen wird.

2. Verfahren nach Anspruch 1, **dadurch gekennzeichnet, dass** das Steuersignal, das im optischen Sender (5) auf die optische Sendeleistung aufmoduliert wird, ein Niederfrequenzpilotton ist.

3. Verfahren nach Anspruch 2, **dadurch gekennzeichnet, dass** der Niederfrequenzpilotton eine Frequenz von 14,4 kHz aufweist.

4. Verfahren nach den Ansprüchen 1-3, **dadurch gekennzeichnet, dass** eine Avalanchefotodiode (8) als Fotodiode im Empfänger verwendet wird und dass die Fotodiode, wenn keine Datenübertragungssignale detektiert werden, durch eine Spannung vorgespannt wird, die so niedrig ist, dass der Avalancheeffekt aufhört.

5. Verfahren nach den Ansprüchen 1-4, **dadurch gekennzeichnet, dass** das Steuersignal ständig auf die optische Sendeleistung aufmoduliert wird.

6. Verfahren nach Anspruch 5, **dadurch gekennzeichnet, dass** die Anwesenheit der Datenübertragungssignale am Empfänger (3) durch Detektieren des Steuersignals detektiert wird.

7. Optischer Empfänger (3), umfassend eine Fotodiode (8), die in einem Betriebszustand durch eine normale Betriebsspannung vorgespannt ist, die für die Fotodiode (8) ausreicht, um modulierte optische Datenübertragungssignale in entsprechende elektrische Signale umwandeln zu können,
**dadurch gekennzeichnet, dass**, wenn keine optischen Datenübertragungssignale empfangen werden, der Empfänger (3) außerdem angepasst ist, um einen Sicherheitszustand einzunehmen, in dem die Fotodiode (8) durch eine Spannung vorgespannt ist, die signifikant niedriger ist als die normale Betriebsspannung, und um in dem Sicherheitszustand die Anwesenheit eines optischen Signals zu detektieren, das mit einem Steuersignal moduliert ist, und um in den Betriebszustand zu schalten, wenn das Steuersignal detektiert wird.

8. Optischer Empfänger nach Anspruch 7, **dadurch gekennzeichnet, dass** die Fotodiode eine Avalanchefotodiode (8) ist.

9. Optischer Empfänger nach Anspruch 8, **dadurch gekennzeichnet, dass** er im Sicherheitszustand angepasst ist, um die Avalanchefotodiode (8) durch eine Spannung vorzuspannen, die so niedrig ist, dass der Avalancheeffekt aufhört.

10. Optischer Empfänger nach den Ansprüchen 7-9, **dadurch gekennzeichnet, dass** er angepasst ist, um die Anwesenheit des Steuersignals auch im Betriebszustand zu detektieren und um den Sicherheitszustand einzunehmen, wenn das Steuersignal nicht empfangen wird.

11. Optischer Empfänger nach den Ansprüchen 7-10, **dadurch gekennzeichnet, dass** er angepasst ist, um mit einer Zeitverzögerung in den Betriebszustand zu schalten, wenn das Steuersignal im Sicherheitszustand detektiert wird.

## Revendications

1. Procédé de protection d'un récepteur optique (3), comprenant une photodiode (8) et capable de recevoir des signaux optiques de communication venant d'un transmetteur optique (5), contre les effets destructeurs causés par de fortes impulsions optiques,
**caractérisé en ce**
• **que** la photodiode (8), lorsqu'il est détecté dans le récepteur que des signaux de communication ne sont pas reçus, est polarisée par une tension considérablement plus basse qu'une tension de fonctionnement normale,
• **qu'**un signal de commande est modulé depuis le transmetteur optique (5) sur la puissance optique transmise,
• **qu'**il est détecté dans le récepteur (3) si ce signal de commande est reçu ou non,
• et **que** la photodiode (8) est polarisée par la tension de fonctionnement normale, lorsqu'il est détecté que le signal de commande est reçu.

2. Procédé selon la revendication 1, **caractérisé en ce que** le signal de commande, qui est modulé dans le transmetteur optique (5) sur la puissance optique transmise, est une tonalité de pilote à basse fréquence.

3. Procédé selon la revendication 2, **caractérisé en ce que** la tonalité de pilote à basse fréquence a une fréquence de 14,4 kHz.

4. Procédé selon les revendications 1 à 3, **caractérisé en ce qu'**une photodiode à avalanche (8) est utilisée comme photodiode dans le récepteur, et que la photodiode, lorsque des signaux de communication ne sont pas détectés, est polarisée par une tension suffisamment basse pour que l'effet d'avalanche cesse.

5. Procédé selon les revendications 1 à 4, **caractérisé en ce que** le signal de commande est constamment modulé sur la puissance optique transmise.

6. Procédé selon la revendication 5, **caractérisé en ce que** la présence de signaux de communication au récepteur (3) est détectée en détectant le signal de commande.

7. Un récepteur optique (3) comprenant une photodiode (8) qui, dans un état opérationnel, est polarisée par une tension de fonctionnement normale suffisante pour que la photodiode (8) soit capable de convertir des signaux optiques de communication modulés en signaux éléctriques correspondants, **caractérisé en ce que**, lorsque des signaux de communication optiques ne sont pas reçus, le récepteur (3) est de plus adapté pour se mettre dans un état de sécurité dans lequel la photodiode (8) est polarisée par une tension considérablement plus basse que la tension de fonctionnement normale, et, dans l'état de sécurité, pour détecter la présence d'un signal optique modulé avec un signal de commande, et pour commuter à l'état opérationnel lorsque le signal de commande est détecté.

8. Un récepteur optique selon la revendication 7, **caractérisé en ce que** la photodiode est une photodiode à avalanche (8).

9. Un récepteur optique selon la revendication 8, **caractérise en ce que**, dans l'état de sécurité, il est adapté de façon à polariser la photodiode à avalanche (8) par une tension suffisamment basse pour que l'effet d'avalanche cesse.

10. Un récepteur optique selon les revendications 7 à 9, **caractérisé en ce qu'**il est adapté pour détecter la présence dudit signal de commande dans l'état opérationnel également et de se mettre dans l'état de sécurité lorsque le signal de commande n'est pas reçu.

11. Un récepteur optique selon les revendications 7 à 10,
**caractérisé en ce qu'**il est adapté pour commuter à l'état opérationnel avec un retard lorsque le signal de commande est détecté dans l'état de sécurité.
